# EUROPEAN PATENT APPLICATION

(11) **EP 4 772 021 A1**
(43) Date of publication of application: **08.07.2026**
(21) Application number: 24859751.0
(22) Date of filing: 27.08.2024
(51) Int. Cl.: A23D 7/005, A21D 2/14, A21D 2/26, A21D 13/80, A23D 7/00, A23L 2/00, A23L 2/52, A23L 29/00

(54) **AGENT FOR IMPROVING FLAVOR PERSISTENCE OF FOOD AND BEVERAGES**

(30) Priority: 28.08.2023 JP 2023138374
(71) Applicant: Fuji Oil Company, Limited, Izumisano-shi Osaka 598-8540 (JP)
(72) Inventor: SUZUKI, Makoto, Izumisano-shi, Osaka 598-8540 (JP); IDE, Misato, Izumisano-shi, Osaka 598-8540 (JP); TOMI, Kenichi, Izumisano-shi, Osaka 598-8540 (JP); MIZUSHIMA, Shigeki, Izumisano-shi, Osaka 598-8540 (JP)
(74) Representative: Boult Wade Tennant LLP
(86) International application number: PCT/JP2024/030441
(87) International publication number: WO 2025/047719

(57) **Abstract**

An object of the present invention is to provide a material for improving the persistence of aroma of a food and/or beverage. It was found that an oil-in-water emulsion using a protein material having specific properties and having an emulsified particle size of 100 nm or less has an excellent effect of improving the persistence of aroma of a food and/or beverage.

## Description

### Technical Field

The present invention relates to an agent for improving persistence of aroma of a food and/or beverage.

### Background Art

The persistence of aroma is an important element as a factor that determines the palatability of a food and/or beverage. Various methods regarding methods for allowing aroma of a food and/or beverage to persist have been studied.

For example, there are a method for improving the persistence by delaying the timing of aroma perception using an emulsified aroma agent or an oily aroma agent (Patent Document 1), a method for adding a material that allows aroma to be perceived persistently, such as alkanoyl amino acid amide (Patent Document 2), and a method for gradually releasing aroma from foods using microcapsules (Patent Document 3). In addition, there are a method for adding a liquid oil-in-water emulsion to a food (Patent Document 4), a technique of using a flavor enhancer containing a brown sugar aromatic fraction (Patent Document 5), a technique of using a polyglycerin condensed ricinoleic acid ester (Patent Document 6), and the like.

### Citation List

### Patent Document

Patent Document 1: JP 2011-74306 A
Patent Document 2: JP H08-103243 A
Patent Document 3: JP 2008-263825 A
Patent Document 4: JP 2015-188434 A
Patent Document 5: JP 2015-192610 A
Patent Document 6: WO2021/256394

### Summary of Invention

### Technical Problem

The techniques of the cited Patent Documents 1 to 6 are insufficient in the effect of improving the persistence of flavor of a food and/or beverage, and there is room for improvement.

An object of the present invention is to provide a material for improving the persistence of flavor of a food and/or beverage.

### Solution to Problem

As a result of intensive studies to solve the above problems, the present inventors have found that an oil-in-water emulsion using a protein material having specific properties and having an emulsified particle size of 100 nm or less has an excellent effect of improving the persistence of aroma of a food and/or beverage, and have completed the present invention.

That is, the present invention is as follows:
(1) An agent for improving persistence of aroma of a food and/or beverage, the agent containing an oil-in-water emulsion satisfying requirements (A) and (B) below:
   (A) the oil-in-water emulsion contains an oily material, a readily water-soluble substance, water, and a protein material having a property described below, and has an emulsified particle size of 100 nm or less; and
   (B) the protein material has such a property that a viscosity is 10000 mPa·s or less as measured at 25°C after heating of an aqueous solution having a crude protein content of 20 mass% at 80°C for 30 minutes, and a TCA solubilization rate at 0.22 M is from 30 to 95%.
(2) The agent for improving persistence of aroma of a food and/or beverage according to (1), wherein the oily material is contained in an amount of from 0.5 to 35 mass% in (A).
(3) The agent for improving persistence of aroma of a food and/or beverage according to (1), wherein the readily water-soluble substance is contained in an amount of from 1 to 80 mass% in (A).
(4) The agent for improving persistence of aroma of a food and/or beverage according to (2), wherein the readily water-soluble substance is contained in an amount of from 1 to 80 mass% in (A).
(5) The agent for improving persistence of aroma of a food and/or beverage according to (2), wherein the protein material is contained in an amount of from 30 to 1200 mass% in terms of crude protein content relative to the oily material in (A).
(6) The agent for improving persistence of aroma of a food and/or beverage according to (4), wherein the protein material is contained in an amount of from 30 to 1200 mass% in terms of crude protein content relative to the oily material in (A).
(7) The agent for improving persistence of aroma of a food and/or beverage according to any one of (1) to (6), wherein water is contained in an amount of from 5 to 70 mass% in (A).
(8) The agent for improving persistence of aroma of a food and/or beverage according to (1), wherein the oily material is contained in an amount of from 0.5 to 35 mass%, the readily water-soluble substance is contained in an amount of from 1 to 80 mass%, water is contained in an amount of 5 to 70 mass%, and the protein material is contained in an amount of 30 to 1200 mass% in terms of crude protein content relative to the oily material in (A).
(9) The agent for improving persistence of aroma of a food and/or beverage according to any one of (1) to (6), wherein the protein material has an NSI of 80 or more.
(10) The agent for improving persistence of aroma of a food and/or beverage according to (7), wherein the protein material has an NSI of 80 or more.
(11) The agent for improving persistence of aroma of a food and/or beverage according to (8), wherein the protein material has an NSI of 80 or more.
(12) A method for improving persistence of aroma of a food and/or beverage, the method including adding an oil-in-water emulsion containing a flavor material to a food and/or beverage, provided that the oil-in-water emulsion satisfies requirements (A) and (B) below:
   (A) the oil-in-water emulsion contains an oily material, a readily water-soluble substance, water, and a protein material having a property described below, and has an emulsified particle size of 100 nm or less; and
   (B) the protein material has such a property that a viscosity is 10000 mPa·s or less as measured at 25°C after heating of an aqueous solution having a crude protein content of 20 mass% at 80°C for 30 minutes, and a TCA solubilization rate at 0.22 M is from 30 to 95%.
(13) The method for improving persistence of aroma of a food and/or beverage according to (12), wherein the oily material is contained in an amount of from 0.5 to 35 mass%, the readily water-soluble substance is contained in an amount of from 1 to 80 mass%, water is contained in an amount of from 5 to 70 mass%, and the protein material is contained in an amount of from 30 to 1200 mass% in terms of crude protein content relative to the oily material in (A).
(14) A method for improving persistence of aroma of a food and/or beverage, the method including adding an oil-in-water emulsion satisfying requirements (A) and (B) below to a food and/or beverage:
   (A) the oil-in-water emulsion contains an oily material, a readily water-soluble substance, water, and a protein material having a property described below, and has an emulsified particle size of 100 nm or less; and
   (B) the protein material has such a property that a viscosity is 10000 mPa·s or less as measured at 25°C after heating of an aqueous solution having a crude protein content of 20 mass% at 80°C for 30 minutes, and a TCA solubilization rate at 0.22 M is from 30 to 95%.
(15) The method for improving persistence of aroma of a food and/or beverage according to (14), wherein the oily material is contained in an amount of from 0.5 to 35 mass%, the readily water-soluble substance is contained in an amount of from 1 to 80 mass%, water is contained in an amount of from 5 to 70 mass%, and the protein material is contained in an amount of from 30 to 1200 mass% in terms of crude protein content relative to the oily material in (A).

### Advantageous Effects of Invention

The present invention can improve the persistence of aroma of a food and/or beverage.

### Brief Description of Drawings

FIG. 1 is a diagram illustrating the intensity of aroma at every correction time of 0.1 after a solution obtained by diluting an oil-in-water emulsion containing 2-heptanone is put in the mouth and then swallowed.
FIG. 2 is a diagram illustrating the diffusion behavior of 2-heptanone volatilized from an oil-in-water emulsion.
FIG. 3 is a diagram illustrating the diffusion behavior of ethyl butyrate volatilized from an oil-in-water emulsion.
FIG. 4 is a diagram illustrating the diffusion behavior of butyric acid volatilized from an oil-in-water emulsion.

### Description of Embodiments

### Agent for Improving Persistence of Aroma of Food and/or Beverage

The agent for improving persistence of aroma of a food and/or beverage of the present invention contains an oil-in-water emulsion satisfying the following requirements (A) and (B).
(A) The oil-in-water emulsion contains an oily material, a readily water-soluble substance, water, and a protein material having a property described below, and has an emulsified particle size of 100 nm or less.
(B) The protein material in (A) has such a property that a viscosity is 10000 mPa·s or less as measured at 25°C after heating of an aqueous solution having a crude protein content of 20 mass% at 80°C for 30 minutes, and a TCA solubilization rate at 0.22 M is from 30 to 95%.

In (A), preferably, the oily material is contained in an amount of from 0.5 to 35 mass%, the readily water-soluble substance is contained in an amount of from 1 to 80 mass%, water is contained in an amount of from 5 to 70 mass%, and the protein material is contained in an amount of from 30 to 1200 mass% in terms of crude protein content relative to the oily material, in the oil-in-water emulsion.

The content of the oil-in-water emulsion used in the agent for improving persistence of aroma of a food and/or beverage of the present invention in the agent for improving persistence can be preferably 50 mass% or more, more preferably 60 mass% or more, 70 mass% or more, 75 mass% or more, 80 mass% or more, 85 mass% or more, 90 mass% or more, 95 mass% or more, or 100 mass% in a solid content.

In the present invention, the "aroma of a food and/or beverage" includes the aroma of the food and/or beverage to which a flavor material is added, in addition to the aroma of the food and/or beverage.

In the present invention, the persistence of aroma of a food and/or beverage refers to the length of time during which the aroma can be felt when the food and/or beverage is put in the mouth, and the improvement in the persistence is judged by this length of time. The evaluation method will be described below. How to perceive aroma differs depending on each aroma component. Therefore, in the evaluation of the improvement in the persistence of aroma, the length of the time is determined according to each aroma component.

The emulsified particle size of the oil-in-water emulsion is important, and the effect of allowing the aroma of a food and/or beverage to persist can be exhibited by setting the emulsified particle size to 100 nm or less. The emulsified particle size of the oil-in-water emulsion is preferably 99 nm or less, and can be more preferably 95 nm or less, 93 nm or less, 90 nm or less, 85 nm or less, 80 nm or less, 75 nm or less, 70 nm or less, or 65 nm or less. The lower limit is not particularly limited, but is preferably 0.001 nm or more. More preferably, it may be 0.01 nm or more, 0.1 nm or more, 0.5 nm or more, 1 nm or more, 2 nm or more, 5 nm or more, 8 nm or more, or 10 nm or more.

The agent for improving persistence of aroma of the present invention can improve the persistence of aroma of various foods and/or beverages.

Examples of the flavor material involved in the aroma of the food and/or beverage include the following materials.

That is, examples thereof include α-methyl ketones such as acetaldehyde, diacetyl, ethyl methyl ketone, 2-hexanone, 2-pentanone, 2-heptanone, and 2-nonanone; sulfur-containing compounds such as methional, methionol, methanethiol, ethanethiol, dimethyl sulfide, and dimethyl disulfide; ketones, such as lactones such as γ-lactone, δ-lactone, δ-dodecalactone, and δ-octalactone; organic acids such as acetic acid, butyric acid, and isovaleric acid; esters such as ethyl butyrate; pyrazines such as 2,3,5,6-tetramethylpyrazine, 2-ethylpyrazine, 2-methylpyrazine, 2,6-dimethylpyrazine, and 2-ethyl-3-methylpyrazine; and terpenes such as limonene.

The agent for improving persistence of aroma of the present invention can improve the persistence of aroma of various flavor materials such as the flavor materials exemplified above.

In an embodiment, when one containing various flavor materials in the agent for improving persistence of aroma of the present invention is blended in a food and/or beverage, the persistence of aroma of the various flavor materials in the food and/or beverage can be improved.

In another embodiment, the persistence of aroma of a food and/or beverage can be improved by separately blending the agent for improving persistence of aroma of the present invention and various flavor materials into the food and/or beverage.

In yet another embodiment, the agent for improving persistence of aroma of the present invention is blended in a food and/or beverage, whereby the persistence of aroma contained in the food and/or beverage can also be improved.

When a flavor material is blended in the oil-in-water emulsion used in the present invention, the concentration of the flavor material in the oil-in-water emulsion is not particularly limited, and may be appropriately determined according to the type of the flavor material and the like. The lower limit amount is preferably 0.1 ppb or more. More preferably, the lower limit amount may be 0.5 ppb or more, 1 ppb or more, 5 ppb or more, 0.01 ppm or more, 0.05 ppm or more, 0.1 ppm or more, 0.2 ppm or more, 0.5 ppm or more, 0.7 ppm or more, or 1 ppm or more. The upper limit amount is preferably 300000 ppm or less. More preferably, the upper limit amount may be 200000 ppm or less, 150000 ppm or less, 100000 ppm or less, 80000 ppm or less, or 50000 ppm or less. The lower limit amount and the upper limit amount can be optionally combined. Examples thereof include from 0.1 ppb to 300000 ppm (from 1 × 10⁻¹⁰ mass% to 30 mass%), from 0.05 to 200000 ppm (from 5 × 10⁻⁸ mass% to 20 mass%), from 0.1 to 100000 ppm (from 1 × 10⁻⁷ mass% to 10 mass%), and from 0.2 to 50000 ppm (2 × 10⁻⁷ mass% to 5 mass%).

The food and/or beverage in which the agent for improving persistence of aroma of the present invention can be used is not particularly limited.

Examples of the food and/or beverage include instant noodles, retort foods, instant foods such as instant soybean soup, Japanese style clear soup, and soup, favorite beverages such as carbonated beverages, fruit juice beverages, vegetable beverages, coffee beverages, sports beverages, tea-based beverages, beverages containing cocoa components such as chocolate, and alcoholic beverages, flour products such as bread, pasta, noodles, and cake mix, confectioneries such as candies, chewing gum, chocolate, biscuits, snacks, cookies, Japanese confectionery, rice confectionery, and desserts, condiments such as sauces, curry roux, sauces/broths, and dressings, oil and/or fat foods such as mayonnaise, dairy products such as processed milk, milk beverages, yogurts, lactic acid bacteria beverages, cheese, butter, margarine, ice cream, and cream, plant-based dairy alternative products made primarily from plant-based raw materials, frozen foods, fish paste products, ham and sausages, jams and marmalades, and pickled vegetables. In addition, examples thereof include foods and/or beverages to which cocoa components such as cocoa powder, cocoa paste, cocoa mass, cocoa butter, and cocoa extract are blended, and foods and/or beverages to which the above-described dairy products or plant-based dairy alternative products are blended.

Preferable examples thereof include instant noodles, retort foods, instant foods such as instant soybean soup, Japanese style clear soup, and soup, favorite beverages such as carbonated beverages, fruit juice beverages, vegetable beverages, coffee beverages, sports beverages, tea-based beverages, beverages containing cocoa components such as chocolate, and alcoholic beverages, dairy products such as processed milk, milk beverages, yogurts, lactic acid bacteria beverages, cheese, butter, margarine, ice cream, and cream, plant-based dairy alternative products made primarily from plant-based raw materials, and foods and/or beverages to which dairy products or plant-based dairy alternative products are blended.

The amount of the agent for improving persistence of aroma of a food and/or beverage of the present invention to be blended into a food and/or beverage may be determined depending on the type of the food and/or beverage. For example, the lower limit amount of the agent for improving persistence of aroma of a food and/or beverage of the present invention to be blended into a food and/or beverage is preferably 0.0001 mass% or more in terms of the amount of the oil-in-water emulsion of the present invention. The lower limit amount may be more preferably 0.0005 mass% or more, 0.0008 mass% or more, or 0.001 mass% or more. The upper limit amount is preferably 50 mass% or less. The upper limit amount may be more preferably 30 mass% or less, 20 mass% or less, 15 mass% or less, 12 mass% or less, 10 mass% or less, or 8 mass% or less. The lower limit amount and the upper limit amount may be optionally combined, and examples thereof include from 0.0001 to 50 mass%, from 0.0005 to 30 mass% or less, from 0.0008 to 10 mass%, and from 0.001 to 8 mass%.

Typical examples of the aroma component of dairy products among the above-mentioned foods and/or beverages include α-methyl ketones such as acetaldehyde, diacetyl, ethyl methyl ketone, 2-hexanone, 2-pentanone, 2-heptanone, and 2-nonanone; sulfur-containing compounds such as methional, dimethyl sulfide, and dimethyl disulfide; lactones such as γ-nonalactone, δ-decalactone, δ-dodecalactone, and δ-octalactone; organic acids such as acetic acid, butyric acid, and isovaleric acid; and esters such as ethyl butyrate. In the present invention, the persistence of aroma of such an aroma component can be improved. Therefore, it is considered that the persistence of aroma of a dairy product can be improved by blending the agent for improving persistence of aroma of the present invention into the dairy product.

### Oily Material

The oily material of the present invention contains an oil and/or fat. Examples of the oil and/or fat include oils and/or fats such as soybean oil, rapeseed oil, corn oil, safflower oil, rice bran oil, cottonseed oil, sunflower oil, sesame oil, olive oil, peanut oil, palm oil, palm kernel oil, coconut oil, lard, beef tallow, fish oil, and medium-chain fatty acid oil; products obtained by modifying them through interesterification, hydrogenation, or the like; and fatty acids obtained by decomposing them. Examples of the fatty acid also include polyunsaturated fatty acids (e.g., eicosapentaenoic acid, docosahexaenoic acid, arachidonic acid, and γ-linolenic acid and/or ethyl esters) and the like. To obtain finer emulsion particles, the oily material having a melting point of 40°C or less is preferable, an oil and/or fat having the same melting point is more preferable, and a medium-chain fatty acid oil (MCT) is most preferable.

Also, the oil-soluble substances exemplified below can be added for reasons such as imparting physiological functions and coloring. Examples thereof include, but are not limited to, dyes such as carotenoids and carotenoid derivatives (e.g., α-carotene or β-carotene, 8'-apo-β-carotenal, 8'-apo-β-carotenoic acid ester), flavonoids, turmeric, annatto, anthocyanin, and tar dyes, fat-soluble vitamins such as vitamins A, D, E, and K, coenzyme Q10, and derivatives thereof (vitamin A ester and vitamin E ester, for example, vitamin A acetate, vitamin A palmitate, and tocopherol acetate), and antioxidants such as dibutylhydroxytoluene (BHT), butylhydroxyanisole (BHA), licorice oil extract, unsaponifiable matter of sesame oil, γ-oryzanol, rapeseed oil extract, and L-ascorbic acid ester.

### Protein Material

The protein material used in the present invention needs to have a low viscosity after heating. The viscosity of the protein material used in the present invention is measured by preparing an aqueous solution of the protein material having a crude protein content of 20 mass%, and heating the aqueous solution at 80°C for 30 minutes, followed by measuring the viscosity at 25°C. The viscosity after heating is 10000 mPa·s or less, preferably 5000 mPa·s or less, 1000 mPa·s or less, or 500 mPa·s or less, and more preferably 200 mPa·s or less, or 100 mPa·s or less.

The present protein material is required to have a molecular weight of certain size. The molecular weight is defined by the TCA solubilization rate. In the present invention, the TCA solubilization rate is defined by the ratio of the content of the crude protein dissolved in 0.22 M TCA to the total content of the crude protein. The TCA solubilization rate is from 30 to 95%, preferably from 35 to 90%, more preferably from 40 to 85% or from 50 to 80%. When the TCA solubilization rate is too low, the viscosity after heating tends to increase, which is undesirable, and the transmittance decreases. Meanwhile, when the TCA solubilization rate is too high, the content of the protein contributing to the emulsifiability decreases, and a larger amount of the protein material is required to be incorporated. As a result, the flexibility in the incorporation is reduced, which is not preferable.

The present protein material preferably has an NSI (nitrogen solubility index) used as an index of protein solubility of 80 or more. More preferably, the protein material having an NSI of 85 or more, 90 or more, 95 or more, or 97 or more can be used. A high NSI of the protein material indicates high dispersibility in water and can contribute to dispersion stability of the oil-in-water emulsified composition of the present invention. When the NSI is too low, precipitation is more likely to occur, which is not preferred. The crude protein content in the protein material is also preferably 30 mass% or more, more preferably 50 mass% or more, and most preferably 70 mass% or more. The protein material having a higher crude protein content can exhibit the function in a smaller amount.

In general, such a protein material is not commercially available, and can be obtained by a denaturation and molecular weight adjustment treatment described below or the like. Examples of commercially available products include "MIRA-MAP 2.0" available from Fuji Oil Co., Ltd. Commercially available soybean protein materials such as "FUJIPRO R", "FUJIPRO 748", "FUJIPRO CL", and "HINUTE DC6" (all available from Fuji Oil Co., Ltd.) do not fall under this requirement.

Although the origin of the protein material to be prepared is not particularly limited, plant-derived, animal-derived, or microorganism-derived proteins can be used. Examples of the plant protein include proteins derived from legumes, such as soybean, pea, mung bean, lupin bean, chickpea, kidney bean, lentil bean, and cowpea; seeds, such as sesame, canola seed, coconut seed, and almond seed; grains, such as corn, buckwheat, wheat, and rice; vegetables; fruits; algae; and microalgae. For example, a protein material derived from soybean is prepared by further concentrating and processing a protein from a soybean raw material such as defatted soybean or whole soybean, and in general, examples thereof conceptually include soybean protein isolates, soybean protein concentrates, soybean milk powder, and various processed products thereof.

Examples of the animal protein include egg proteins containing ovalbumin, milk proteins such as casein, whey, lactalbumin, and lactalbumin, proteins derived from blood such as plasma, serum albumin, and decolorized hemoglobin, proteins derived from meat, and proteins derived from fish and shellfish. In addition, proteins derived from microorganisms such as yeasts, molds, and bacteria can be used. Even in the case of a protein having poor solubility in water, a protein material that can be used in the present invention can be prepared by the treatment described below.

### Denaturation and Molecular Weight Adjustment Treatment

The protein material used in the oil-in-water emulsion of the present invention can be obtained by applying combination of "degradation/denaturation treatment" for degrading and/or denaturing a protein and "molecular weight distribution adjustment treatment" for adjusting the molecular weight distribution of the protein. Examples of the "degradation/denaturation treatment" include enzyme treatment, pH adjustment treatment (e.g., acid treatment or alkali treatment), denaturant treatment, heating treatment, cooling treatment, high-pressure treatment, organic solvent treatment, mineral addition treatment, supercritical treatment, ultrasonic treatment, electrolysis treatment, and combination of these. Examples of the "molecular weight distribution adjustment treatment" include filtration, gel filtration, chromatography, centrifugation, electrophoresis, dialysis, and combinations thereof. The order and number of operations of the "degradation/denaturation treatment" and the "molecular weight distribution adjustment treatment" are not particularly limited; the "degradation/denaturation treatment" may be performed before the "molecular weight distribution adjustment treatment", the "molecular weight distribution adjustment treatment" may be performed before the "degradation/denaturation treatment", or both treatments may be performed at the same time. In addition, for example, it is also possible to perform the "degradation/denaturation treatment" between two or more operations of the "molecular weight distribution adjustment treatment", to perform the "molecular weight distribution adjustment treatment" between two or more operations of the "degradation/denaturation treatment", or to perform each of the treatments a plurality of times in any order. In a case where a desired molecular weight distribution is provided by the "degradation/denaturation treatment", the "molecular weight distribution adjustment treatment" need not be performed.

When these treatments are combined and carried out a plurality of times, all the treatments may be carried out continuously from the raw material stage or may be carried with intervals therebetween. For example, a commercially available product that has undergone a certain treatment may be used as a raw material and subjected to another treatment. As long as the above properties are satisfied, the specific protein material may be produced by mixing a protein material that has undergone the molecular weight distribution adjustment treatment with a protein material that has not undergone the molecular weight distribution adjustment treatment. In this case, the ratio of the two protein materials (the protein material that has undergone the treatment:the protein material that has not undergone the treatment) can be adjusted as appropriate within a range such that the characteristics described above are satisfied, and the ratio by mass may be, for example, from 1:99 to 99:1, such as from 50:50 to 95:5, or from 75:25 to 90:10. In an embodiment, the protein material used in the oil-in-water emulsion of the present aspect is composed of a protein material that has undergone the "degradation/denaturation and molecular weight distribution adjustment treatments".

In the treatment for degrading or denaturing a protein, conditions such as enzyme, pH, the types and concentrations of an organic solvent and a mineral, temperature, pressure, output intensity, current, and time can be appropriately set by a person skilled in the art. In a case where an enzyme is used, examples of the enzyme to be used include proteases that are classified into "metal proteases", "acidic proteases", "thiol proteases", and "serine proteases". The reaction can be carried out at a reaction temperature of from 20 to 80°C, preferably of from 40 to 60°C. In the case of a pH adjustment treatment, the treatment can be carried out in a pH range in which any pH values of 2, 2.5, 3, 3.5, 4, 4.5, 5, 5.5, 6, 6.5, 7, 7.5, 8, 8.5, 9, 9.5, 10, 10.5, 11, 11.5, and 12 are set as the upper limit and the lower limit, and for example, the pH range may be from 2 to 12. In the case of an acid treatment, the method may be a method of adding an acid or a method of carrying out fermentation treatment, such as lactic acid fermentation. Examples of the acid to be added include inorganic acids, such as hydrochloric acid and phosphoric acid; and organic acids, such as acetic acid, lactic acid, citric acid, gluconic acid, phytic acid, sorbic acid, adipic acid, succinic acid, tartaric acid, fumaric acid, malic acid, and ascorbic acid. Alternatively, an acid may be added using a food and/or beverage containing an acid, such as a fruit juice of lemon or the like, a concentrated fruit juice, fermented milk, yogurt, or a brewed vinegar. In the case of an alkali treatment, an alkali such as sodium hydroxide or potassium hydroxide can be added. In the case of a denaturant treatment, a denaturant such as guanidine hydrochloride, urea, arginine, or PEG may be added. In the case of a heating or cooling treatment, examples of the heating temperature include temperature ranges in which any temperatures of 60°C, 70°C, 80°C, 90°C, 100°C, 110°C, 120°C, 125°C, 130°C, 135°C, 140°C, 145°C, and 150°C are set as the upper limit and the lower limit, and for example, the temperature range may be from 60°C to 150°C. Examples of the cooling temperature include temperature ranges in which any temperatures of - 10°C, -15°C, -20°C, -25°C, -30°C, -35°C, -40°C, -45°C, -50°C, -55°C, -60°C, -65°C, -70°C, and -75°C are set as the upper limit and the lower limit, and for example, the temperature range may be from -10°C to -75°C. Examples of the heating or cooling time include time ranges in which any times of 5 seconds, 10 seconds, 30 seconds, 1 minute, 5 minutes, 10 minutes, 20 minutes, 30 minutes, 40 minutes, 50 minutes, 60 minutes, 70 minutes, 80 minutes, 90 minutes, 100 minutes, 120 minutes, 150 minutes, 180 minutes, and 200 minutes are set as the upper limit and the lower limit, and for example, the time range may be from 5 seconds to 200 minutes. In the case of a high-pressure treatment, examples of the pressure condition include pressure ranges in which any pressures of 100 MPa, 200 MPa, 300 MPa, 400 MPa, 500 MPa, 600 MPa, 700 MPa, 800 MPa, 900 MPa, and 1000 MPa are set as the upper limit and the lower limit, and for example, the pressure range may be from 100 MPa to 1000 MPa. In the case of an organic solvent treatment, examples of the solvent to be used include alcohols and ketones, such as ethanol and acetone. In the case of a mineral addition treatment, examples of the mineral to be used include ions of divalent metals such as calcium and magnesium. In the case of a supercritical treatment, the treatment can be implemented by using, for example, carbon dioxide in a supercritical state at a temperature of about 30°C or higher and a pressure of about 7 MPa or higher. In the case of an ultrasonic treatment, the treatment can be carried out by, for example, irradiation at a frequency of from 100 KHz to 2 MHz with an output of from 100 to 1000 W. In the case of an electrolysis treatment, for example, an aqueous protein solution may be treated by application of a voltage of from 100 mV to 1000 mV. In a specific embodiment, the treatment for degrading and/or denaturing a protein is selected from the denaturant treatment, the heating treatment, and combinations thereof.

In the treatment for adjusting the molecular weight distribution of a protein, conditions such as the type of filter medium, the carrier for gel filtration, centrifugal rotation speed, electric current, and time can be appropriately set by a person skilled in the art. Examples of the filter medium include filter paper, filter cloth, diatomaceous earth, ceramics, glass, and membranes. Examples of the carrier for gel filtration include dextran and agarose. Examples of the conditions of centrifugation include conditions of from 1000 to 3000 × g and of from 5 to 20 minutes.

### Readily Water-Soluble Substance

Although a continuous phase of the oil-in-water emulsion of the present invention is an aqueous solution of the above-described protein material, the amount of water contained therein is preferably small. To reduce water in the aqueous solution, it is necessary to replace water with a readily water-soluble substance. The readily water-soluble substance used in the present invention has a solubility of 30 mass% or more, preferably 60 mass% or more, more preferably 100 mass% or more in water, and most preferably can be mixed and dissolved in water at any ratio. The readily water-soluble substance has a boiling point higher than that of water. The substance is preferably an inorganic salt or an organic substance containing no nitrogen, and examples of the organic substance include a polyhydric alcohol containing a saccharide.

The polyhydric alcohol is a generic term for compounds having two or more hydroxyl groups in one molecule, and the type thereof is not particularly limited. Examples thereof include glycerin, propylene glycol, sorbitol, maltitol, xylitol, erythritol, lactitol, sorbitan, xylose, arabinose, mannose, trehalose, lactose, sugar, coupling sugar, glucose, enzyme starch syrup, acid saccharified starch syrup, maltose starch syrup, maltose, isomerized sugar, fructose, reduced maltose, reduced starch syrup, and honey. These may be used alone or in a combination of two or more types thereof.

Examples of the salt include salts satisfying the above solubility among chlorides, nitrates, sulfates, phosphates, and organic acid salts of monovalent or divalent metals such as sodium, potassium, calcium, and magnesium, or with ammonium. Sodium chloride, ammonium sulfate, sodium dihydrogen phosphate, sodium lactate, and the like can be exemplified.

### Emulsifier

In the present invention, it is not necessary to actively blend an emulsifier other than the protein materials described above. In particular, it may be undesirable in terms of quality to contain an emulsifier during an emulsification step.

Herein, when referred to as an emulsifier, examples thereof include synthetic emulsifiers and natural emulsifiers. Specific examples thereof include synthetic emulsifiers such as monoacylglycerol, diacylglycerol, polyglycerin fatty acid ester, sucrose fatty acid ester, sodium stearoyl lactate, calcium stearoyl lactate, polyoxyethylene derivative, fatty acid salt, and processed starch, derivatives of lecithin obtained by chemically or enzymatically treating naturally occurring lecithins, such as enzymatically decomposed lecithin, hydrogenated enzymatically decomposed lecithin, hydroxylecithin, phosphatidylglycerol, phosphatidic acid, and acetylated lecithin, and naturally occurring saponins such as soybean saponin and quillaja saponin. Proteins that do not meet the requirements of the protein material described above, for example, milk casein, lactalbumin, and the like that have not been subjected to the treatment according to the present invention are also included in the emulsifier as long as they have emulsifiability.

### Blending Proportion

The blending will be described below. Although an aqueous phase and an oil phase are separately prepared, the following blending is finally performed. While it is difficult to prepare an oil-in-water emulsion of the present invention when it is out of the blending, it is possible to produce an oil-in-water emulsion having a smaller particle size when the blending is preferable.

The oily material is used as the oil phase. The content of the oily material in the oil-in-water emulsion of the present invention is preferably from 0.5 to 35 mass%. The lower limit thereof is more preferably from 0.8 mass or more, and still more preferably 1 mass% or more, and may be 2 mass% or more. The upper limit thereof is more preferably 33 mass% or less, still more preferably 30 mass% or less, and may be 28 mass% or less, 25 mass% or less, 22 mass% or less, 20 mass% or less, 18 mass% or less, or 15 mass% or less. The lower limit amount and the upper limit amount can be optionally combined. For example, the content thereof may be from 1 to 30 mass%, from 2 to 25 mass%, from 2 to 20 mass%, or from 2 to 15 mass%.

The aqueous phase has the following composition. The content of the protein material is preferably from 30 to 1200 mass% in terms of crude protein content relative to the oil and/or fat material. The lower limit thereof is more preferably 35 mass% or more, still more preferably 40 mass% or more, and may be 45 mass% or more, 50 mass% or more, 55 mass% or more, or 60 mass% or more. The upper limit thereof is more preferably 1000 mass% or less, still more preferably 800 mass% or less, and may be 600 mass% or less, or 400 mass% or less. The lower limit amount and the upper limit amount can be optionally combined. For example, the content may be from 35 to 1000 mass%, from 40 to 800 mass%, from 50 to 600 mass%, or from 60 to 400 mass%. It is also preferable that the following conditions are satisfied as the crude protein content. The lower limit amount of the crude protein content in the oil-in-water emulsion is preferably 1 mass% or more, more preferably 2 mass% or more, and may be 3 mass% or more, 5 mass% or more, 8 mass% or more, or 10 mass% or more. The upper limit amount thereof is preferably 20 mass% or less, more preferably 18 mass% or less, and may be 15 mass% or less, or 12 mass% or less. The lower limit amount and the upper limit amount can be optionally combined. For example, the content may be from 1 to 20 mass%, from 2 to 18 mass%, from 5 to 15 mass%, or from 10 to 12 mass%.

The content of water in the oil-in-water emulsion of the present invention is preferably from 5 to 70 mass%. The upper limit thereof is more preferably 65 mass% or less, still more preferably 60 mass% or less, and may be 55 mass% or less, 50 mass% or less, 45 mass% or less, 40 mass% or less, 35 mass% or less, 30 mass% or less, 25 mass% or less, or 20 mass% or less.

The lower limit thereof is more preferably 6 mass% or more, and more preferably 7 mass% or more.

The content of the readily water-soluble substance in the oil-in-water emulsion is preferably 1 to 80 mass%. The lower limit thereof is more preferably 3 mass% or more, still more preferably 5 mass% or more, and may be 8 mass% or more, 10 mass% or more, 15 mass% or more, or 20 mass% or more. The upper limit thereof is more preferably 70 mass% or less, still more preferably 65 mass% or less, and may be 60 mass% or less. The lower limit amount and the upper limit amount can be optionally combined. For example, the content is preferably from 10 to 70 mass%, and may be from 20 to 65 mass%, from 40 to 65 mass%, or the like.

The total amount of the readily water-soluble substance and water is preferably 2 times by mass or more, more preferably 4 times by mass or more, and most preferably 6 times by mass or more, relative to the protein material.

In addition to the oily material, the protein material, and the readily water-soluble substance, various substances can be added as long as they do not affect the present invention.

### Preparation of Stock Solution of Emulsion

A preparation method will be described below, and first, the preparation of the aqueous phase will be described. The protein material and the readily water-soluble substance are added to water, and the aqueous phase is dissolved by stirring or the like. The temperature of water to be used is not particularly limited, and warm water is preferable. The temperature is suitably from 60 to 80°C. When the temperature is low, the viscosity increases and workability deteriorates, whereas when the temperature is high, the oily material to be blended may deteriorate. The protein material used in the present invention is characterized by having a low viscosity after heating, and the aqueous phase prepared here also exhibits a low viscosity in spite of a high crude protein concentration.

Next, the preparation of the oil phase will be described. The oil phase is the oily material described above, and usually, only an oil and/or fat or a mixture obtained by adding an oily material other than oil and/or fat such as the oil-soluble substance described above to the oil and/or fat is used. Depending on the fatty acid or the like constituting also the oil phase, warming is preferred, and, in many cases, preparation is carried out at a temperature equal to or higher than the melting point thereof.

### Emulsification Apparatus

Two liquids of the aqueous phase and the oil phase are mixed. At this time, preliminary emulsification is preferably performed. The preliminary emulsification is to prepare an oil-in-water emulsion having a particle size of about 10 to 100 µm by treatment with a homomixer or the like. The rotation speed varies depending on the apparatus. For example, in the case of HOMOGENIZING MIXER MARK II Model 2.5 available from PRIMIX Corporation, processing at 8000 rpm for about 10 minutes can be exemplified.

Subsequently, main emulsification is performed. Although the emulsification is not particularly limited, an emulsification apparatus having a high shear force is preferable, and examples thereof include a homomixer, a colloid mill, a jet mill, a high-pressure homogenizer, an ultrahigh pressure homogenizer, and a vacuum emulsifier. Specifically, APV Gaulin Homogenizer (available from APV), Microfluidizer (available from Microfluidex International Corp.), Ultimizer (available from Sugino Machine Limited), Nanomizer (available from NANOMIZER Inc.) or the like can be preferably used.

It is preferable to perform emulsification at a pressure of 50 MPa or more using such a high-pressure emulsification apparatus. When Microfluidizer is exemplified, it is effective to perform shearing treatment twice or more, preferably four times or more, more preferably ten times or more, at a pressure of preferably 100 MPa or more, more preferably 150 MPa or more.

In place of the above homogenization treatment machine, for example, a homogenization treatment machine such as an ultrasonic emulsifier may be used. Examples thereof include ultrasonic homogenizers US-600, US-1200T, RUS-1200T, and MUS-1200T (all available from NISSEI Corporation), and ultrasonic processors UIP-2000, UIP-4000, UIP-8000, and UIP-16000 (all available from Hielscher GmbH). Such a high-power ultrasonic irradiator is used at a frequency of 25 kHz or less, and preferably from 15 to 20 kHz.

The oil-in-water emulsion of the present invention and its raw materials are evaluated by the following procedures.

### Water Content

The water content is determined by an ordinary pressure heating loss method (105°C, 12 hours).

### Crude Protein Content

The crude protein content is measured by the Kjeldahl method. Specifically, the mass of nitrogen measured by the Kjeldahl method is represented by "mass%" as the crude protein content of a dried product, with respect to the weight of the protein material. The nitrogen conversion coefficient is 6.25. Basically, the value is obtained by rounding off the numerical value to the first decimal place.

### NSI

To 3 g of a sample, 60 mL of water is added, followed by propeller stirring at 37°C for 1 hour and centrifugation at 1400 × g for 10 minutes to collect a supernatant (I). Subsequently, 100 mL of water is added again to the remaining precipitate, and the mixture is again subjected to the propeller stirring at 37°C for 1 hour, followed by centrifugation to collect a supernatant (II). The supernatants (I) and (II) are combined, and water is added to the mixture to make a total volume of 250 mL. After the mixture is filtered through a filter paper (No. 5), the nitrogen content of the filtrate is measured by the Kjeldahl method. At the same time, the nitrogen content of the sample is measured by the Kjeldahl method, and the ratio of the amount of nitrogen recovered in the filtrate (water-soluble nitrogen) to the total amount of nitrogen in the sample is expressed in mass% and the expressed mass% is defined as NSI. Basically, the value is obtained by rounding off the numerical value to the first decimal place.

### TCA Solubilization Rate

The TCA solubilization rate is determined by adding an equal volume of 0.44 M trichloroacetic acid (TCA) to a 2 mass% aqueous solution of a protein material to yield a 0.22 M TCA solution, and measuring the proportion of the soluble nitrogen by the Kjeldahl method. Basically, the value is obtained by rounding off the numerical value to the first decimal place.

### Viscosity (Viscosity after Heating)

The viscosity of the protein material is measured using a B-type viscometer (Type BM, available from Toki Sangyo Co., Ltd.). An aqueous solution of the protein material having a crude protein content of 20 mass% is prepared and placed in a measurement container. After setting a rotor and sealing the container, the container is heated at 80°C for 30 minutes in a hot water bath. Next, the viscosity is measured at 25°C at any rotation speed, the indicated value is read, and the viscosity is calculated by multiplying the read value by the conversion factor corresponding to the rotor number and the rotation speed. (Unit: Pa·s) The measurement value is set as the value after 1 minute. Basically, the rotation speed is set to 60 rpm. For samples with high viscosity, the rotor is changed from No. 1 to No. 4, and the rotation speed is reduced to 6 rpm. The upper limit of measurable viscosity in this measurement is 100000 mPa·s. When the measurement range is exceeded in the rotor No. 4 at a rotation speed of 6 rpm, the viscosity after heating is immediately determined to be 100000 mPa·s or higher.

### Emulsified Particle Size

To measure the emulsified particle size, the oil-in-water emulsion is diluted with water so that the content of the oily material is 0.03 mass%, to prepare a sample. The emulsified particle size is measured by the dynamic light scattering method or the laser diffraction scattering method.

### · Dynamic light scattering method

A z-average particle size (z-average size) is measured at 25°C with Zetasizer Nano-Zs available from Malvern Instruments. The particle size of nano-order is measured by using the dynamic light scattering method.

### · Laser diffraction scattering method

The median size is measured by SALD-2300 (available from Shimadzu Corporation, measurement condition: 1.50-0.20i).

### Examples

Hereinafter, the present invention is described by way of Examples. In the Examples, parts and % are based on mass unless otherwise specified.

### Raw materials

The raw materials used in Examples and Comparative Examples are as described below.

### Protein Material

Soybean protein material A: MIRA-MAP 2.0, available from Fuji Oil Co., Ltd., crude protein content: 79.3%, TCA solubilization rate: 61.8%, viscosity after heating: 28 mPa·s, NSI: 98.1

### Oily Material

Palm oil (trade name: Palm Ace N, available from Fuji Oil Co., Ltd.), rapeseed oil (trade name: Salad Oil for Confectionery, available from Fuji Oil Co., Ltd.), or butter extract was used. The butter extract is a material obtained by extracting an oil phase from salt-free butter (trade name: Meiji Butter, salt-free, available from Meiji Co., Ltd.).

### Readily Water-Soluble Substance

Glycerin (food additive, available from KISHIDA CHEMICAL CO., LTD., solubility in water: optional, boiling point: 290°C)

### Example 1, Comparative Example 1 Evaluation of Temporal Change in Aroma

To evaluate the temporal change in aroma in the process of tasting the oil-in-water emulsion, the temporal change in aroma of 2-heptanone having aroma of a dairy product was evaluated by the Time Intensity (TI) method described below.

An oil-in-water emulsion was prepared using the raw materials and the formulation shown in Table 1.

The soybean protein material A, glycerin, and water were dissolved using a homomixer (HOMOGENIZING MIXER MARK II Model 2.5, available from PRIMIX Corporation) with heating at 65°C, to prepare an aqueous phase. Rapeseed oil in which 2-heptanone was dissolved was added to the prepared aqueous phase, and the mixture was pre-emulsified for 2 minutes using a homomixer, and then emulsified with a high-pressure homogenizer (Microfluidizer, available from Microfluidics) to produce an oil-in-water emulsion. To produce an emulsion having a different particle size, the emulsification conditions (emulsification pressure: from 50 to 200 MPa, number of passes: from 1 to 10) of the high-pressure homogenizer were changed for preparation.

For flavor evaluation, each oil-in-water emulsion was diluted with ion-exchanged water so that the content of the oily material was 0.1 mass% and the content of 2-heptanone was 5 ppm, to prepare a diluted liquid. This liquid was used as a sample for flavor evaluation.

**(Table 1)**

| | Example 1 | Comparative Example 1 |
|---|---|---|
| | Oil-in-water emulsion A | Oil-in-water emulsion B |
| Rapeseed oil (%) | 12.4375 | 12.4375 |
| 2-Heptanone (%) | 0.0625 | 0.0625 |
| Soybean protein material A (%) | 14 | 14 |
| Glycerin (%) | 55.5 | 55.5 |
| Water (%) | 18 | 18 |
| Total (%) | 100 | 100 |
| Crude protein content (%) | 11.1 | 11.1 |
| Crude protein content/oil and/or fat ratio (%) | 89 | 89 |
| Emulsified particle size (nm) (dynamic light scattering method) | 62 | - |
| Emulsified particle size (nm) (laser diffraction scattering method) | - | 1538 |

### Evaluation by Time Intensity (TI) Method

10 ml of the sample for flavor evaluation was placed in each plastic cup. Five panelists drank the total amount in one swallow and evaluated the aroma for 1 minute. The evaluation was made by setting the intensity of the aroma before drinking to 0 and the intensity of the aroma when the aroma was felt most strongly during drinking the sample to 100. Sensory evaluation software FIZZ (available from Alpha MOS) was used for the sensory evaluation of the sample.

The data for each panelist was subjected to time correction, with the time at which the aroma began to be perceived being defined as 0 and the time taken for the aroma intensity to decay to 15% of the maximum intensity being defined as 1. At each time (every 0.1 correction time), the average value of the intensities of the five panelists was calculated and plotted.

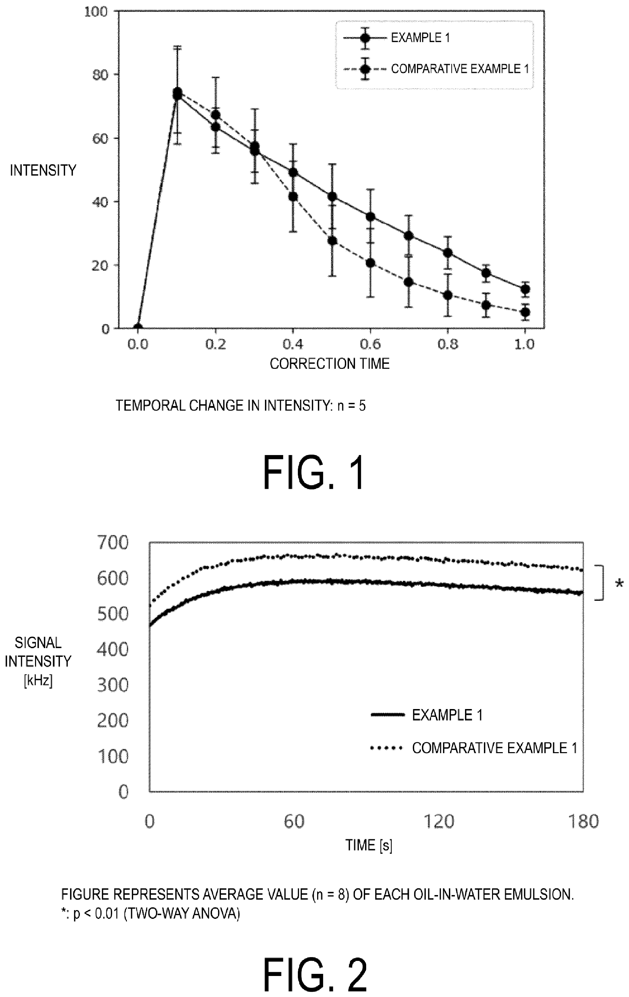

The results are illustrated in FIG. 1.

There was no difference in the intensity of the aroma between the oil-in-water emulsions A and B from the start of drinking to the time when the aroma exhibited the maximum intensity. However, it was found that the oil-in-water emulsion A having an emulsified particle size of 100 nm or less had a higher aroma intensity and a better effect of the persistence of aroma after the correction time of 0.4.

### Examples 2 to 5, Comparative Examples 2 and 3 Particle Size and Persistence of Aroma of Oil-in-Water Emulsion

An oil-in-water emulsion was prepared using the raw materials and the formulation shown in Table 2.

The soybean protein material A, glycerin, and water were dissolved using a homomixer (HOMOGENIZING MIXER MARK II Model 2.5, available from PRIMIX Corporation) with heating at 65°C, to prepare an aqueous phase. As the flavor material, palm oil in which 2-heptanone was dissolved was added to the prepared aqueous phase, and the mixture was pre-emulsified for 2 minutes using a homomixer, and then emulsified with a high-pressure homogenizer (Microfluidizer, available from Microfluidics) to produce an oil-in-water emulsion. To produce an emulsion having a different particle size, the emulsification conditions (emulsification pressure: from 50 to 200 MPa, number of passes: from 1 to 10) of the high-pressure homogenizer were changed for preparation.

Next, for flavor evaluation, each oil-in-water emulsion was diluted with ion-exchanged water so that the content of the oily material was 0.1 mass% and the content of 2-heptanone was 5 ppm, to prepare a diluted liquid. This liquid was used as a sample for flavor evaluation.

The emulsified particle size was measured in the same manner as in Example 1.

### Evaluation Method of Aroma

Three panelists were involved. Each panelist held 10 ml of the sample for flavor evaluation in the mouth and swallowed 2 seconds after the sample was held in the mouth. The time taken until the aroma of 2-heptanone disappeared was measured using a stopwatch, with the time at which the sample was held in the mouth being defined as 0 seconds. When the time taken until the aroma disappeared was 25 seconds or more, there was an effect of improving the persistence of aroma, which was determined to be acceptable. The results are shown in Table 2.

**(Table 2)**

| | Example 2 | Example 3 | Example 4 | Example 5 | Comparative Example 2 | Comparative Example 3 |
|---|---|---|---|---|---|---|
| | Oil-in-water emulsion C | Oil-in-water emulsion D | Oil-in-water emulsion E | Oil-in-water emulsion F | Oil-in-water emulsion G | Oil-in-water emulsion H |
| Palm oil (%) | 12.4375 | 12.4375 | 12.4375 | 12.4375 | 12.4375 | 12.4375 |
| 2-Heptanone (%) | 0.0625 | 0.0625 | 0.0625 | 0.0625 | 0.0625 | 0.0625 |
| Soybean protein material A (%) | 14 | 14 | 14 | 14 | 14 | 14 |
| Glycerin (%) | 55.5 | 55.5 | 55.5 | 55.5 | 55.5 | 55.5 |
| Water (%) | 18 | 18 | 18 | 18 | 18 | 18 |
| Total (%) | 100 | 100 | 100 | 100 | 100 | 100 |
| Crude protein content (%) | 11.1 | 11.1 | 11.1 | 11.1 | 11.1 | 11.1 |
| Crude protein content/oil and/or fat ratio (%) | 89 | 89 | 89 | 89 | 89 | 89 |
| Emulsified particle size (nm) (dynamic light scattering method) | 60 | 75 | 87 | 92 | 131 | - |
| Emulsified particle size (nm) (laser diffraction light scattering method) | - | - | - | - | - | 1368 |
| Time taken until aroma disappeared (seconds) | 35 | 29 | 27 | 30 | 22 | 18 |

As shown in Table 2, the oil-in-water emulsions C to F having an emulsified particle size of 100 nm or less exhibited good results of the persistence of aroma.

### Examples 6 and 7 and Comparative Examples 4 and 5

In Examples 2 to 5, 2-heptanone was mixed with palm oil in advance to prepare an oil-in-water emulsion, and then the flavor evaluation was performed when the oil-in-water emulsion was diluted. In this Example, an oil-in-water emulsion containing no 2-heptanone was prepared, and the one obtained by diluting the oil-in-water emulsion with a separately prepared 2-heptanone solution was subjected to the flavor evaluation. That is, in this Example, the 2-heptanone solution was used as a model of food and/or beverage containing an aroma component, and the effect when the oil-in-water emulsion was blended to this was confirmed.

An oil-in-water emulsion was prepared using the raw materials and the formulation shown in Table 3.

The soybean protein material A, glycerin, and water were dissolved using a homomixer (HOMOGENIZING MIXER MARK II Model 2.5, available from PRIMIX Corporation) with heating at 65°C, to prepare an aqueous phase. Palm oil was added to the prepared aqueous phase, and the mixture was pre-emulsified for 2 minutes using a homomixer, and then emulsified with a high-pressure homogenizer (Microfluidizer, available from Microfluidics) to produce an oil-in-water emulsion.

An oil-in-water emulsion having a different particle size was prepared in the same manner as in Example 2 except that the emulsification conditions were changed.

Next, 2-heptanone was dissolved in ion-exchanged water to prepare a 2-heptanone solution of 5 ppm. For flavor evaluation, each oil-in-water emulsion was diluted with the 2-heptanone solution so that the content of the oily material was 0.1 mass%, to prepare a diluted liquid. This liquid was used as a sample for flavor evaluation. It was evaluated in the same manner as in Example 2. The results are shown in Table 3.

**(Table 3)**

| | Example 6 | Example 7 | Comparative Example 4 | Comparative Example 5 |
|---|---|---|---|---|
| | Oil-in-water emulsion I | Oil-in-water emulsion J | Oil-in-water emulsion K | Oil-in-water emulsion L |
| Palm oil (%) | 12.5 | 12.5 | 12.5 | 12.5 |
| Soybean protein material A (%) | 14 | 14 | 14 | 14 |
| Glycerin (%) | 55.5 | 55.5 | 55.5 | *55.5* |
| Water (%) | 18 | 18 | 18 | 18 |
| Total (%) | 100 | 100 | 100 | 100 |
| Crude protein content (%) | 11.1 | 11.1 | 11.1 | 11.1 |
| Crude protein content/oil and/or fat ratio (%) | 89 | 89 | 89 | 89 |
| Emulsified particle size (nm) (dynamic light scattering method) | 60 | 97 | 144 | - |
| Emulsified particle size (nm) (laser diffraction light scattering method) | - | - | - | 1356 |
| Time taken until aroma disappeared (seconds) | 34 | 26 | 21 | 20 |

As shown in Table 3, even when the oil-in-water emulsions I and J having an emulsified particle size of 100 nm or less were added to the 2-heptanone solution, good results of the persistence of aroma were achieved.

### Test Example 1 Confirmation of Diffusion Behavior of Aroma Component in Oil-in-Water Emulsion

Analysis was performed for the purpose of grasping a difference in the diffusion behavior of the aroma component from the emulsion.

25 ml of each of the samples for flavor evaluation of Example 1 and Comparative Example 1 was weighed in a glass bottle, and the head space was purged with nitrogen at 100 ml/min under stirring. The purged gas was introduced into SIFT-MS (available from Syft Technologies). The target compound (2-heptanone) was ionized by using reagent ions, and a signal at a mass-to-charge ratio of 144 was detected. The measurement for 3 minutes from the start of stirring was repeated 8 times, and the average value was calculated. A two-way ANOVA was performed on the results. The results of the average values are illustrated in FIG. 2 (vertical axis: signal intensity/horizontal axis: time).

As illustrated in FIG. 2, the release amount of 2-heptanone was smaller in the oil-in-water emulsion A. It was considered that since the oil-in-water emulsion A more easily retains 2-heptanone in the solution, when the solution is held in the mouth and is swallowed, a larger amount of the aroma component remains in the oral cavity together with the solution, and thus the aroma is continuously perceived.

### Example 8, Comparative Example 6 Effect on Aroma of Cookie Blended with Butter-Like Food Using Soybean Raw Material

An oil-in-water emulsion was prepared in the same manner as in Example 2, except that 2-heptanone was not blended, based on the formulation shown in Table 4.

**(Table 4)**

| | Example 8 | Comparative Example 6 |
|---|---|---|
| | Oil-in-water emulsion M | Oil-in-water emulsion N |
| Butter extract (%) | 12.5 | 12.5 |
| Soybean protein material A (%) | 14 | 14 |
| Glycerin (%) | 55.5 | 55.5 |
| Water (%) | 18 | 18 |
| Total (%) | 100 | 100 |
| Crude protein content (%) | 11.1 | 11.1 |
| Crude protein content/oil and/or fat ratio (%) | 89 | 89 |
| Emulsified particle size (nm) (dynamic light scattering method) | 63 | - |
| Emulsified particle size (nm) (laser diffraction scattering method) | - | 1370 |

### Preparation of Cookie

The raw materials were mixed using a mixer according to the formulation shown in Table 5 to prepare a dough. The dough was stored in a refrigerator for 1 hour and was rolled out so that the thickness of the dough became 5 mm, followed by cut-out. It was baked in an oven at 170°C for 12 minutes to produce a cookie.

**(Table 5)**

| | Control | Example 8 | Comparative Example 6 |
|---|---|---|---|
| Soft flour (parts) | 120 | 120 | 120 |
| Water-in-oil emulsion (Soy lait Beurre, available from Fuji Oil Co., Ltd.) (parts) | 50 | 50 | 50 |
| Granulated sugar (parts) | 50 | 50 | 50 |
| Whole egg (parts) | 20 | 20 | 20 |
| Oil-in-water emulsion M (parts) | - | 4 | - |
| Oil-in-water emulsion N (parts) | - | - | 4 |
| Total (parts) | 240 | 244 | 244 |

When the cookie of Example 8 was eaten, such a result that the butter-like aroma after eating lasted longer than that of the control was achieved. In contrast, the cookie of Comparative Example 6 was not different from the control, and the effect of improving the persistence of aroma was low.

### Example 9, Comparative Example 7 Effect on Aroma of Cocoa Tea

An oil-in-water emulsion was prepared in the same manner as in Example 6, based on the formulation shown in Table 6. Each oil-in-water emulsion was added to cocoa tea (available from Ishibiki cacao issai) so that the content of the oily material was 0.1 mass%. Then, the persistence of the cocoa aroma in the cocoa tea was evaluated by three panelists.

As a result, all the three panelists evaluated that the cocoa aroma of the cocoa tea to which the oil-in-water emulsion of Example 9 was added was more persistent than that of the cocoa tea to which the oil-in-water emulsion was not added. In contrast, the cocoa aroma of the cocoa tea to which the oil-in-water emulsion of Comparative Example 7 was added was evaluated as being not persistent.

**(Table 6)**

| | Example 9 | Comparative Example 7 |
|---|---|---|
| | Oil-in-water emulsion O | Oil-in-water emulsion P |
| Palm oil (%) | 12.5 | 12.5 |
| Soybean protein material A (%) | 14 | 14 |
| Glycerin (%) | 55.5 | 55.5 |
| Water (%) | 18 | 18 |
| Total | 100 | 100 |
| Crude protein content (%) | 11.1 | 11.1 |
| Crude protein content/oil and/or fat ratio (%) | 89 | 89 |
| Emulsified particle size (nm) (dynamic light scattering method) | 60 | - |
| Emulsified particle size (nm) (laser diffraction scattering method) | - | 1138 |

### Example 10, Comparative Example 8 Persistence of Aroma of Ethyl Butyrate

An oil-in-water emulsion was prepared in the same manner as in Example 2, based on the formulation shown in Table 7. Next, a sample for flavor evaluation was prepared in the same manner as in Example 2 except that ethyl butyrate was used instead of 2-heptanone as a component having aroma of a dairy product. In addition, aroma was evaluated in the same manner as in Example 2. When the time taken until the aroma disappeared was 25 seconds or more, there was an effect of improving the persistence of aroma, which was determined to be acceptable. The results are shown in Table 7.

**(Table 7)**

| | Example 10 | Comparative Example 8 |
|---|---|---|
| | Oil-in-water emulsion Q | Oil-in-water emulsion R |
| Palm oil (%) | 12.475 | 12.475 |
| Ethyl butyrate (%) | 0.025 | 0.025 |
| Soybean protein material A (%) | 14 | 14 |
| Glycerin (%) | 55.5 | 55.5 |
| Water (%) | 18 | 18 |
| Total (%) | 100 | 100 |
| Crude protein content (%) | 11.1 | 11.1 |
| Crude protein content/oil and/or fat ratio (%) | 89 | 89 |
| Emulsified particle size (nm) (dynamic light scattering method) | 68 | - |
| Emulsified particle size (nm) (laser diffraction light scattering method) | - | 1406 |
| Time taken until aroma disappeared (seconds) | 41 | 23 |

As shown in Table 7, the oil-in-water emulsion Q having an emulsified particle size of 100 nm or less exhibited good results of the persistence of aroma.

### Example 11, Comparative Example 9 Persistence of Aroma of Butyric Acid

An oil-in-water emulsion was prepared in the same manner as in Example 2, based on the formulation shown in Table 8. Next, a sample for flavor evaluation was prepared in the same manner as in Example 2 except that butyric acid was used instead of 2-heptanone as a component having aroma of a dairy product. In addition, aroma was evaluated in the same manner as in Example 2. When the time taken until the aroma disappeared was 30 seconds or more, there was an effect of improving the persistence of aroma, which was determined to be acceptable. The results are shown in Table 8.

**(Table 8)**

| | Example 11 | Comparative Example 9 |
|---|---|---|
| | Oil-in-water emulsion S | Oil-in-water emulsion T |
| Palm oil (%) | 12.1875 | 12.1875 |
| Butyric acid (%) | 0.3125 | 0.3125 |
| Soybean protein material A (%) | 14 | 14 |
| Glycerin (%) | 55.5 | 55.5 |
| Water (%) | 18 | 18 |
| Total (%) | 100 | 100 |
| Crude protein content (%) | 11.1 | 11.1 |
| Crude protein content/oil and/or fat ratio (%) | 89 | 89 |
| Emulsified particle size (nm) (dynamic light scattering method) | 67 | - |
| Emulsified particle size (nm) (laser diffraction light scattering method) | - | 1466 |
| Time taken until aroma disappeared (seconds) | 46 | 28 |

As shown in Table 8, the oil-in-water emulsion S having an emulsified particle size of 100 nm or less exhibited good results of the persistence of aroma.

### Example 12, Comparative Example 10 Persistence of Aroma of δ-Octalactone

An oil-in-water emulsion was prepared in the same manner as in Example 2, based on the formulation shown in Table 9. Next, a sample for flavor evaluation was prepared in the same manner as in Example 2 except that δ-octalactone was used instead of 2-heptanone as a component having aroma of a dairy product. In addition, aroma was evaluated in the same manner as in Example 2. When the time taken until the aroma disappeared was 55 seconds or more, there was an effect of improving the persistence of aroma, which was determined to be acceptable. The results are shown in Table 9.

**(Table 9)**

| | Example 12 | Comparative Example 10 |
|---|---|---|
| | Oil-in-water emulsion U | Oil-in-water emulsion V |
| Palm oil (%) | 11.875 | 11.875 |
| δ-Octalactone (%) | 0.625 | 0.625 |
| Soybean protein material A (%) | 14 | 14 |
| Glycerin (%) | 55.5 | 55.5 |
| Water (%) | 18 | 18 |
| Total (%) | 100 | 100 |
| Crude protein content (%) | 11.1 | 11.1 |
| Crude protein content/oil and/or fat ratio (%) | 89 | 89 |
| Emulsified particle size (nm) (dynamic light scattering method) | 69 | - |
| Emulsified particle size (nm) (laser diffraction light scattering method) | - | 1490 |
| Time taken until aroma disappeared (seconds) | 84 | 49 |

As shown in Table 9, the oil-in-water emulsion U having an emulsified particle size of 100 nm or less exhibited good results of the persistence of aroma.

### Test Examples 2 and 3

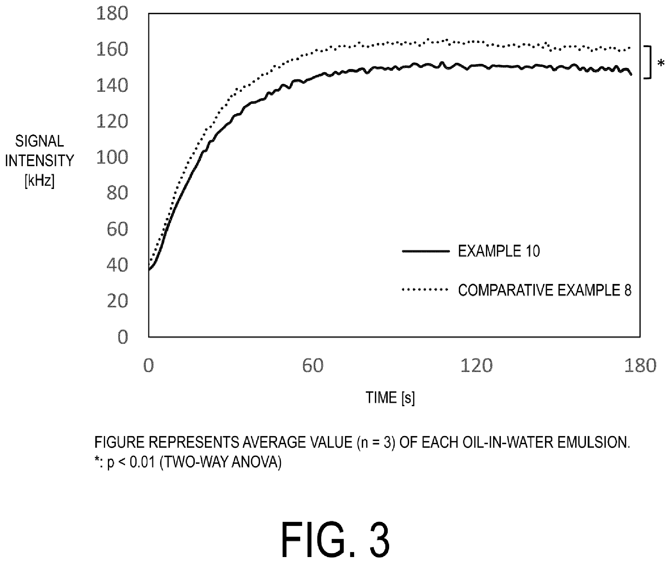

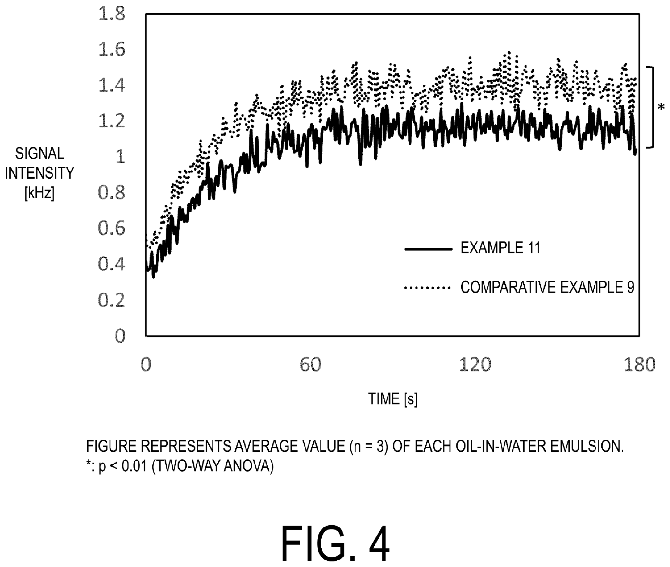

The diffusion behavior of the aroma component was confirmed in the same manner as in Test Example 1 except that ethyl butyrate or butyric acid was used as the aroma component instead of 2-heptanone, and the measurement for 3 minutes from the start of stirring was repeated three times. That is, the oil-in-water emulsions of Example 10 and Comparative Example 8 were used in Test Example 2. The results of Test Example 2 are illustrated in FIG. 3. The oil-in-water emulsions of Example 11 and Comparative Example 9 were used in Test Example 3. The results of Test Example 3 are illustrated in FIG. 4.

As illustrated in FIG. 3, the release amount of ethyl butyrate was smaller in the oil-in-water emulsion Q of Example 10. As illustrated in FIG. 4, the release amount of butyric acid was smaller in the oil-in-water emulsion S of Example 11. The oil-in-water emulsion Q more easily retains ethyl butyrate in the solution and the oil-in-water emulsion S more easily retains butyric acid in the solution. Thus, it was considered that when the solution is held in the mouth and is swallowed, the oil-in-water emulsion Q or the oil-in-water emulsion S allows a larger amount of the aroma component to remain in the oral cavity together with the solution, and thus the aroma is continuously perceived.

## Claims

1. An agent for improving persistence of aroma of a food and/or beverage, the agent comprising an oil-in-water emulsion satisfying requirements (A) and (B) below:
(A) the oil-in-water emulsion contains an oily material, a readily water-soluble substance, water, and a protein material having a property described below, and has an emulsified particle size of 100 nm or less; and
(B) the protein material has such a property that a viscosity is 10000 mPa·s or less as measured at 25°C after heating of an aqueous solution having a crude protein content of 20 mass% at 80°C for 30 minutes, and a TCA solubilization rate at 0.22 M is from 30 to 95%.

2. The agent for improving persistence of aroma of a food and/or beverage according to claim 1, wherein the oily material is contained in an amount of from 0.5 to 35 mass% in (A).

3. The agent for improving persistence of aroma of a food and/or beverage according to claim 1, wherein the readily water-soluble substance is contained in an amount of from 1 to 80 mass% in (A).

4. The agent for improving persistence of aroma of a food and/or beverage according to claim 2, wherein the readily water-soluble substance is contained in an amount of from 1 to 80 mass% in (A).

5. The agent for improving persistence of aroma of a food and/or beverage according to claim 2, wherein the protein material is contained in an amount of from 30 to 1200 mass% in terms of crude protein content relative to the oily material in (A).

6. The agent for improving persistence of aroma of a food and/or beverage according to claim 4, wherein the protein material is contained in an amount of from 30 to 1200 mass% of in terms of crude protein content relative to the oily material in (A).

7. The agent for improving persistence of aroma of a food and/or beverage according to any one of claims 1 to 6, wherein water is contained in an amount of from 5 to 70 mass% in (A).

8. The agent for improving persistence of aroma of a food and/or beverage according to claim 1, wherein the oily material is contained in an amount of from 0.5 to 35 mass%, the readily water-soluble substance is contained in an amount of from 1 to 80 mass%, water is contained in an amount of from 5 to 70 mass%, and the protein material is contained in an amount of from 30 to 1200 mass% in terms of crude protein content relative to the oily material in (A).

9. The agent for improving persistence of aroma of a food and/or beverage according to any one of claims 1 to 6, wherein the protein material has an NSI of 80 or more.

10. The agent for improving persistence of aroma of a food and/or beverage according to claim 7, wherein the protein material has an NSI of 80 or more.

11. The agent for improving persistence of aroma of a food and/or beverage according to claim 8, wherein the protein material has an NSI of 80 or more.

12. A method for improving persistence of aroma of a food and/or beverage, the method comprising adding an oil-in-water emulsion containing a flavor material to a food and/or beverage,
provided that the oil-in-water emulsion satisfies requirements (A) and (B) below:
(A) the oil-in-water emulsion contains an oily material, a readily water-soluble substance, water, and a protein material having a property described below, and has an emulsified particle size of 100 nm or less; and
(B) the protein material has such a property that a viscosity is 10000 mPa·s or less as measured at 25°C after heating of an aqueous solution having a crude protein content of 20 mass% at 80°C for 30 minutes, and a TCA solubilization rate at 0.22 M is from 30 to 95%.

13. The method for improving persistence of aroma of a food and/or beverage according to claim 12, wherein the oily material is contained in an amount of from 0.5 to 35 mass%, the readily water-soluble substance is contained in an amount of from 1 to 80 mass%, water is contained in an amount of from 5 to 70 mass%, and the protein material is contained in an amount of from 30 to 1200 mass% in terms of crude protein content relative to the oily material in (A).

14. A method for improving persistence of aroma of a food and/or beverage, the method comprising adding an oil-in-water emulsion satisfying requirements (A) and (B) below to a food and/or beverage:
(A) the oil-in-water emulsion contains an oily material, a readily water-soluble substance, water, and a protein material having a property described below, and has an emulsified particle size of 100 nm or less; and
(B) the protein material has such a property that a viscosity is 10000 mPa·s or less as measured at 25°C after heating of an aqueous solution having a crude protein content of 20 mass% at 80°C for 30 minutes, and a TCA solubilization rate at 0.22 M is from 30 to 95%.

15. The method for improving persistence of aroma of a food and/or beverage according to claim 14, wherein the oily material is contained in an amount of from 0.5 to 35 mass%, the readily water-soluble substance is contained in an amount of from 1 to 80 mass%, water is contained in an amount of from 5 to 70 mass%, and the protein material is contained in an amount of from 30 to 1200 mass% in terms of crude protein content relative to the oily material in (A).
